# EUROPEAN PATENT SPECIFICATION

(11) **EP 0 415 699 B1**
(45) Date of publication and mention of the grant of the patent: **23.07.1997**
(21) Application number: 90309378.9
(22) Date of filing: 28.08.1990
(51) Int. Cl.: H04N 5/94, H04N 7/30, H04N 5/93

(54) **Digital video signal recorder and reproducer**
Digitalvideosignalaufzeichnungs- und -wiedergabegerät
Dispositif d'enregistrement et de reproduction d'un signal vidéo numérique

(30) Priority: 29.08.1989 JP 221978/89; 29.06.1990 JP 173429/90
(43) Date of publication of application: 06.03.1991
(73) Proprietor: MATSUSHITA ELECTRIC INDUSTRIAL CO., LTD., Kadoma-shi, Osaka-fu 571 (JP)
(72) Inventor: Juri, Tatsuro, Osaka-shi, Osaka-fu 534 (JP); Matsumi, Chiyoko, Suita-shi, Osaka-fu 565 (JP); Kadono, Shinya, Hirakata-shi, Osaka-fu 573 (JP); Ohtaka, Hideki, Neyagawa-shi, Osaka-fu 572 (JP)
(74) Representative: Crawford, Andrew Birkby

(56) References cited:
- EP-A- 0 126 593
- WO-A-87/02210
- GB-A- 2 226 927
- PATENT ABSTRACTS OF JAPAN vol. 12, no. 291 (E-644)9 August 1988 & JP-A-63 067 036

## Description

### 1. Field of the Invention

The present invention relates to an apparatus for recording and reproducing digital video signals after bit rate reduction.

### 2. Description of the Prior Art

In the conventional digital audio apparatus or digital video apparatus, copying has been performed by using the audio signals or video signals after converted to digital signals. What provides the greatest problem in recording and reproducing the digital signals is the fact that the data amount thereof is very large. To meet this problem, various bit rate reduction systems have been proposed, and the recording and reproducing apparatuses using bit rate reduction have been in development. As an example for the bit rate reduction, there is a system of variable length coding to the orthogonally transformed components obtained by subjecting the objective signal to orthogonal transformation. In the orthogonal transformation and the inverse orthogonal transformation, there arise errors caused by rounding in view of the number of digits used for operation thereof and the output digits. For example, in the 8 X 8 Hadamard transformation, when the accuracy of the input is 8 bits, the accuracy of the output is 14 bits, but what is actually used for bit rate reduction is the upper 9 - 10 bits. Also, in the 8 X 8 discrete cosine transformation (normally to be abbreviated as DCT), even when the accuracy of the input is 8 bits and the accuracy of the output coefficient is more than 16 bits, what is used for the bit rate reduction is about the upper 10 bits. Moreover, the real value of the coefficient is irrational number. In the copying method as above, due to the repetition of the inverse orthogonal transformation to the reproduction of the copy output and the orthogonal transformation to the recording of the copy input on each copying, there is a problem of accumulation of distortion.

Also, as the video signals are in general transmitted or recorded by dividing into specified blocks, with respect to the errors which occurred by channel, the errors could not be corrected in block unit and only the detection was performed. In the conventional practice, replacement was made by a block which is 1 page (1 page represents one field or plural fields) before that of the related block for concealment. As a video signal has extremely large inter-page correlation, it was possible to reproduce efficiently the blocks with which the errors were detected by such concealment. However, in the constitution as above, when the scene changes from that of one page before, due to the decrease of the inter-page correlation, there is a possibility for large degradation to be formed by concealment. Also, in case of the increase in the blocks in which detection only was made without correction of the errors that occurred as a result of the repetition of transmission of recording, there occurred blocks which were further concealed by using the concealed blocks, thereby incurring large degradation of image quality in the rapidly moving video signals and the like.

A digital video tape recorder which suffers from these disadvantages is disclosed in EP-A-0126593. This video recorder employs a plurality of heads, the signals supplied by each head comprising different sections of the signal which are demultiplexed to give a complete signal. This system decodes and recodes the signal each time it is copied, thus causing degradation of each stage.

The object of the present invention is to provide a digital video signal recorder and reproducer in which is is possible to suppress degradation in image quality accumulated in case of repetition of copying to the minimum extent and to suppress degradation in image quality by concealment in the normal reproduction of the digital video signals which were subjected to bit rate reduction.

This object is achieved by the subject-matter claimed in claim 1.

In an aspect of the invention, in case of the recording and reproducing the digital video signals which have been subjected to bit rate reduction, by employing the error corrected signal as a digital copy output on the reproduced output side and the digital copy output as an input on the recording input side, copying is performed under the state of bit rate reduction. As there is free from accumulation of the distortion in orthogonal transformation or bit rate reduction, copying can be repeated without causing degradation in image quality. Further, as the signals subjected to bit rate reduction are used, it is possible to perform copying in the state of low data rate.

In another aspect of the invention, in case of transmitting or recording the digital video signals on a block by block basis under such state that one page is constituted by one field or a plurality of fields and the data is subjected to intra-page division to form blocks, judgement is made as to which of the data in the reference block located in the same position one page before or the data in the reference block located in the sale position one page after has the stronger correlation with the data of the block in which an error has been detected due to transmission error or the like, and the block in which the error has been detected is replaced by the reference block having the stronger correlation. By this procedure, even in case of the inter-page change of scene, no degradation in image quality occurs and the degradation in image quality can be suppressed to the minimum extent.

In still another aspect of the invention, in case of transmitting or recording the digital video signals on a block by block basis under such state that one page is constituted by one field or a plurality of fields and the data is subjected to intra-page division to form blocks, with respect to the block in which an error has been detected, the concealment information in the reference block located in the same position one page before said block and the concealment information in the reference block located in the same position one page after said block are detected, and when there exists a block which was previously replaced and in which the error is at present detected, concealment is performed with said block. This provides a greater possibility for perfect reproduction of the data in the block with which error has been detected, thereby making it possible to suppress the degradation in image quality by concealment to the minimum extent. Also, by suppressing the degradation in image quality by concealment to the minimum extent, degradation in image quality in the case of repeated copying also can be suppressed to the minimum extent.

According to the present invention described in claim 1, there is provided a digital video signal recording and reproducing apparatus comprising:
an encoding means for subjecting an input digital video signal to a bit rate reduction encoding to obtain a first bit rate reduction encoded video signal;
a recording signal processing means including a modulation means for modulating the first bit rate reduction encoded video signal from said encoding means to obtain a modulated video signal;
a recording and reproducing means for recording the modulated video signal from said recording signal processing means on a recording medium and for reproducing the recorded signal from said recording medium to obtain a reproduced modulated video signal;
a demodulation means for demodulating the reproduced modulated signal to obtain a reproduced bit rate reduction encoded signal;
an error correcting and concealing means for detecting errors of the reproduced bit rate reduction encoded signal which contain correctable errors and uncorrectable errors, said error correcting and concealing means correcting said correctable errors and concealing said uncorrectable errors to obtain an encoded video signal in which the errors have been corrected or concealed;
a decoding means for decoding the encoded video signal obtained from said error correcting and concealing means to obtain a reproduced digital video signal,
characterised by further comprising;
a copy input means for inputting as a copy input signal a second bit rate reduction encoded video signal supplied from outside of said apparatus;
a selection means for selectively outputting either said first bit rate reduction encoded video signal from said encoding means or said second bit rate reduction encoded video signal from said copy input means and supplying a selected bit rate reduction encoded video signal to said recording signal processing means so that said modulation means modulates the selected bit rate reduction encoded video signal from said selection means to obtain the modulated video signal; and
a copy output means for outputting the encoded video signal obtained from said error correcting and concealing means as a copy output signal.

Fig. 1 is a block diagram of an example of circuit constitution for realizing the present invention;
Fig. 2 is a block diagram of an example of an error corrector given in the example of circuit constitution of Fig. 1;
Fig. 3 is a block diagram of the recorded signal processor for recording given in the example of circuit constitution of Fig. 1;
Fig. 4 is a block diagram of an example of a concealment part given in the example of circuit constitution of Fig. 2;
Fig. 5 is a block diagram of another example of a concealment part given in the example of circuit constitution of Fig. 2;
Fig. 6 is a block diagram of a correlation detector given in the examples of circuit constitution of Fig. 4 and Fig. 5; and
Fig. 7 is a block diagram of a concealment decision part given in the examples of circuit constitution of Fig. 4 and Fig. 5.

### DESCRIPTION OF THE PREFERRED EMBODIMENTS:

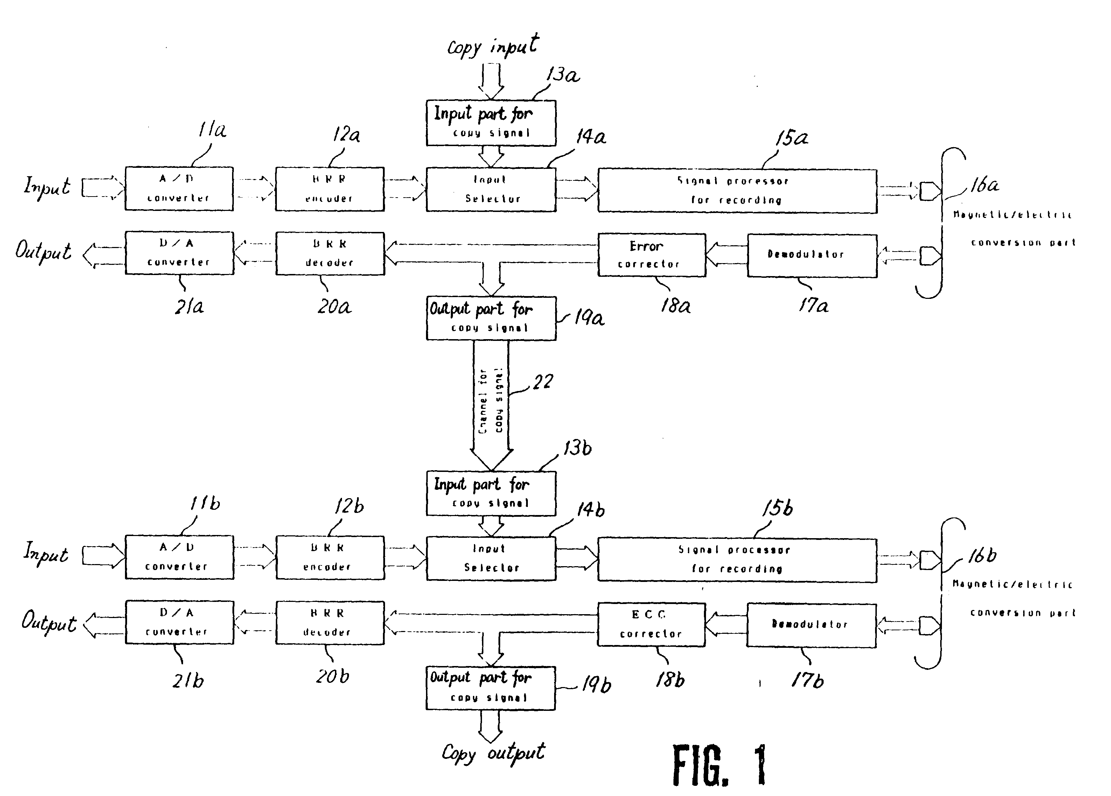

Fig. 1 shows a block diagram of the digital video signal recorder and reproducer in the first embodiment of the present invention, in which the parts 11a and 11b are A/D converters, 12a and 12b are bit rate reduction encoders (hereinafter to be BRR encoders). 13a and 13b are input parts for copy signal, 14a and 14b are input selectors, 15a and 15b are signal processors for recording, 16a and 16b are magnetic/electric conversion parts (magnetic head and magnetic recording medium), 17a and 17b are demodulators, 18a and 18b are error correctors, 19a and 19b are output parts for copy signal, 20a and 20b are bit rate reduction decoders (hereinafter to be BRR decoders), 21a and 21b are D/A converters, and 22 is channel for copy signal.

In the digital signal recorder and reproducer constituted as above, the inputted signal is subjected to A/D conversion with the A/D converter 11a, and bit rate reduction with the BRR encoder 12a. In normal recording, the signal from the BRR encoder 12a, and in copy recording, the signal from the input part for copy signal 13a, is selected by the input selector 14a. The output signal of the input selector 14a is subjected to signal processings such as error correction encoding, modulation, etc. with the signal processor for recording 15a, and thereafter recorded on the magnetic/electric conversion part 16a. The data reproduced from the magnetic/electric conversion part 16a is demodulated with the demodulator 17a, and the signal obtained by correcting with the error corrector 18a is outputted from the output part for copy signal 19a as a copy signal. In obtaining the ultimate output, the signal is subjected to inverse bit rate reduction with the BRR decoder 20a and the signal subjected to D/A conversion with the D/A converter 21a is outputted. In copying, the reproduction output for copying from the output part for copy signal 19a is inputted to the input part for copy signal 13b through the channel for copy signal 22, and after selection with the output from BRR encoder 12 and the input selector 14b, the signal is subjected to processings such as error correction encoding, modulation, etc. with the signal processor for recording 15b, and recorded on the magnetic/electric conversion part 16b.

As described above, according to this embodiment, the frequency of encoding in bit rate reduction is only once at the initial recording, irrespective of the frequency of the subsequent copying. The frequency of decoding in bit rate reduction is also only once at the final outputting. Accordingly, it does not occur for the distortion in orthogonal transformation and bit rate reduction to be accumulated.

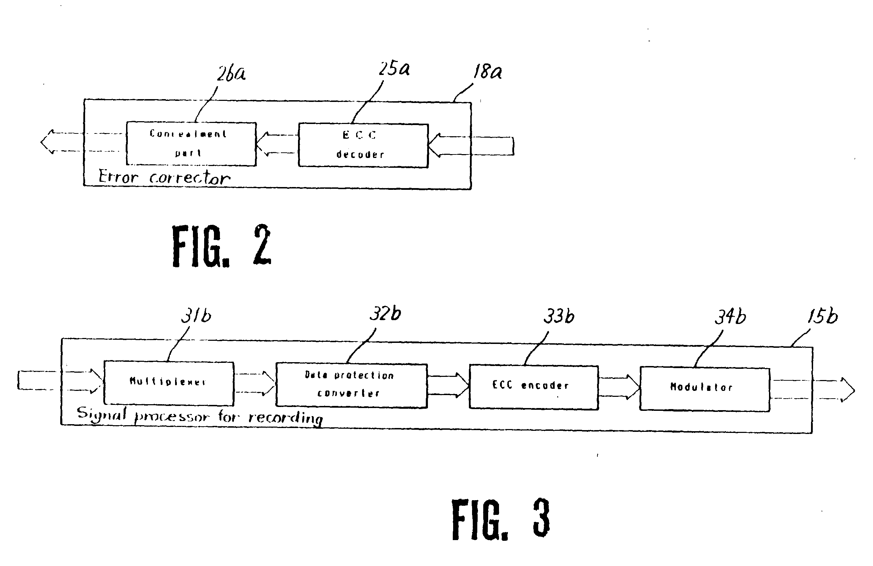

In the second embodiment of the present invention, as shown in Fig. 2, the error corrector 18a is to be divided into two parts of the error correcting code decoder (hereinafter to be EGG decoder) 25a and the concealment part 26a. Similarly, the error corrector 18b also can be divided into two parts. In the ECC decoder 25a, the correctable errors are corrected, and uncorrectable errors are only detected and flags showing the detection of errors are added. In the concealment part 26a, the errors are concealed based on the flags.

In the third embodiment of the present invention, as shown in Fig. 3, the signal process recording 15b is to be divided into four parts of a multiplexer 31b for the BRR encoded video signal and other auxiliary data, data protection converter 32b, error correcting code encoder (hereinafter to be ECC encoder) 33b, and modulator 34b. Similarly, the signal processor for recording 15a also can be divided into four parts. For example, in the case of VCR, with respect to the auxiliary data, besides the information such as character information, title, record date and time, etc., information relating to the format of inputted video signal and audio signal, information relating to the recorded state of signal such as copy protection, generations of - copy and editing, and further the information on the record relating to concealment of error, etc. are multiplexed into video and audio signals with the multiplexer 31a and simultaneously recorded. Accordingly, in copying the said signal, the auxiliary data are as such transferred to the input part for copy signal 13b from the output part for copy signal 19a. In the multiplexer 31b, change is given only to the data which require change such as the information on the recording state of the editing or copy generation, so that the original information can be used for any other data. Any alteration in generation concerning the concealment of errors is to be performed on the portion on which concealment of errors is to be applied. Also, in case of recording not the input signal for copying but the normally inputted video signal, initial state of the information relating to them is to be set. On the other hand, in case of the protection of the recorded contents being performed with the data protection converter 32a, in such apparatuses as to carry out copying by altering from the protected state to the unprotected state, copying by altering from the unprotected state to the protected state, or to use a code such as a password in carrying out protection, the operation to change the code to carry out copying is to be carried out with the data protection converter 32b, and, the alteration of the auxiliary data which has become necessary as a result of the alterations of them is to be carried out with the multiplexer 31b.

The fourth embodiment of the present invention is necessary when there is a possibility for the errors to occur in the communication channel for copy signal 22, where ECC encoding is carried out in the output part for copy signal 19a, and decoding thereof is carried out in the input part for copy signal 13b to correct the errors which occurred in the channel for copy signal 22. Also, according to necessity, there may be so arranged as to provide the input part for copy signal 13b with a function to request the output part for copy signal 19a for retransmission of data.

The block constitution given in the abovementioned embodiments is an example. Even by the different constitution, it is possible to carry out copying by the similar method.

In the bit rate reduction, in general, a video signal in one page is divided by a rectangular parallelepiped formed of three dimension space of horizontal, vertical and time direction (when 1 page is 1 field, this becomes rectangle), and, based on the said rectangular parallelepiped or rectangle as one unit, using an orthogonal transformation or other transformation similar thereto, DC coefficient and AC coefficients are obtained. DC coefficient is a value corresponding to the average of the total video image element value which constitutes the said unit, and is a visually important component. AC coefficient values are used for bit rate reduction by utilizing the fact that they are distributed in a narrow range. Here, there is a method for BRR encoding by collecting the rectangular parallelepipeds of plural units into one block to carry out BRR encoding. In this case, the whole screen in one page or an optionally divided part of the screen of one page, having the rectangular parallelepiped of one unit as the minimum unit is rearranged, and the rectangular parallelepipeds of optional unit number are combined to make 1 block.

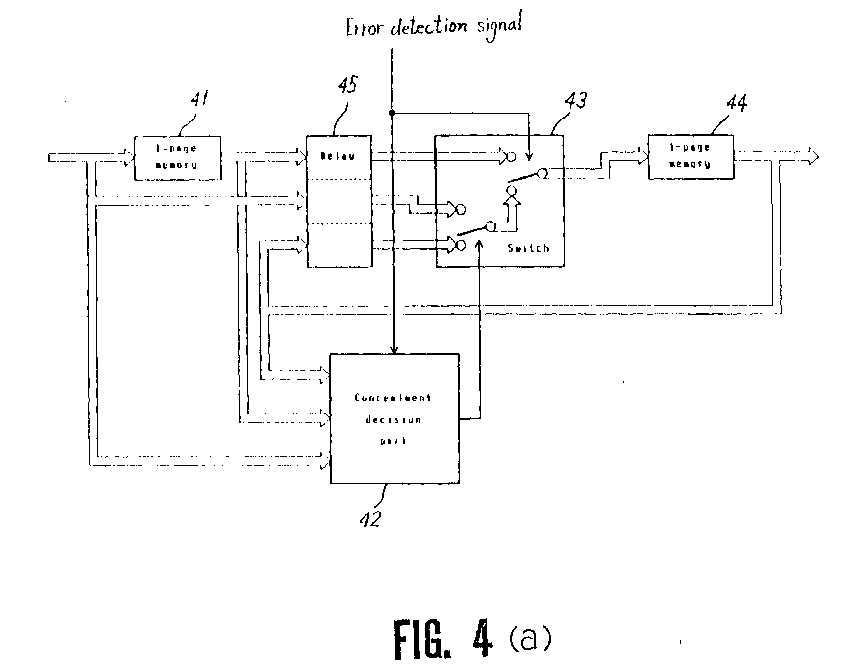

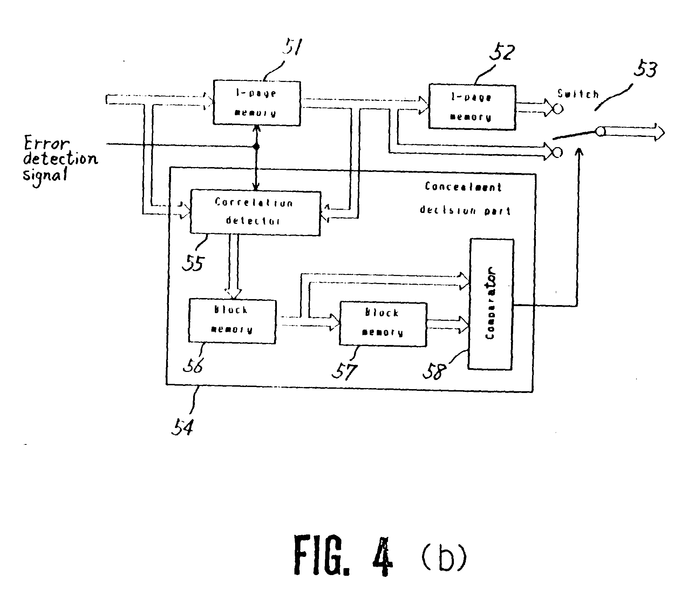

Fig. 4(a) is a block diagram of an error concealment part 26a of the fifth embodiment, in which the parts 41 and 44 are 1-page memories each having capacity of storing 1 page data, 42 is a concealment decision part, 43 is a switch, and 45 is a delay. The operation of the fifth embodiment is explained hereinafter. A block which has been transmitted or recorded and reproduced is first inputted to the 1-page memory 41. In the concealment decision part 42, the block outputted from the 1-page memory 41, when an error is detected in the block, is subjected to judgement as to with which of the data in the reference block one page after that to be inputted or the data in the reference block one page before that to be outputted from the 1-page memory 44 has the stronger correlation of the data of the block. And, in the switch 43, when no error has been'detected, the output of the 1-page memory 41 is selected, and when an error has been detected, the reference block of the page selected by the concealment decision part 42 is selected. The block selected with the switch 43 is outputted via the 1-page memory 44. In general, as there are in fact a large number of non-erroneous data in the block in which errors have been detected, the data in the block in which errors have been detected can be utilized in the concealment decision part 42. By comparing the data in the block one page before from the 1-page memory 44 and the data to be inputted in one page later with the data in the block with which the error from the 1-page memory 41 has been detected to select the block in which there are a large number of the close data, the block having the stronger correlation can be selected. For comparison of data, the difference of the DC coefficients of the parallelepiped which is a unit of the bit rate reduction is taken between the block with which the error has been detected and each reference block, and, based on the respective absolute values, correlation detection operation is carried out by one block. A method of obtaining the sum of the absolute values of the differences of the DC coefficients by one block respectively is the simplest way. While the operation is carried out at the concealment detection part 42, the respective data are delayed in block unit by the delay 45.

Fig. 4(b) is a block diagram of the concealment part 26a of the sixth embodiment, in which the parts 51 and 52 are 1-page memories, 53 is a switch, 54 is a concealment decision part, 55 is a correlation detector, 56 and 57 are each a block memory, and 58 is a comparator. The block which has been transmitted or recorded and reproduced is first inputted to the 1-page memory 51. At this time, by selecting the block in which an error has been detected to "write-inhibit" state, the signal concealed by the reference block one page before is written in the 1-page memory 51. The signal is further transferred to the 1-page memory 52. For blocks in which errors are detected, when the reference block one page later than the error block is judged by the concealment decision part 54 to be better for concealment than the reference block one page before, the signal from the 1-page memory 51 is selected by using the switch 53. Conversely for blocks in which no error has been detected, or for blocks in which errors are detected and when the reference block one page earlier than the error block is judged by the concealment decision part 54 to be better for concealment than the reference block one page later, the signal from the 1-page memory 52 is selected by using the switch 53. In the concealment decision part 54, the difference of the DC coefficient of the parallelepiped which is a unit of the bit rate reduction is taken between the signal from the 1-page memory 51 and the signal to be inputted, and, based on the respective absolute values, correlation detection operation is carried out by one block with correlation block with correlation detector 55. However, if an error has been detected with either block, the related information is written in the block memory 56. As to the operation to obtain the correlation information, a method of obtaining the average of the absolute values of the differences of the DC coefficients by one block is the simplest way. And, the results thereof are written in the block memory 56 by block, and transferred to the block memory 57 on a page by page basis. In the comparator 58, the correlated information between the block near the block in which errors have been detected and the block near the reference block one page before it is read out from the block memory 57, and the information about correlation between the block near the block in which errors have been detected and the block near the reference block one page after it is read out from the block memory 56, and the respective correlated information is subjected to operation in consideration of the distance from the block in which the error has been detected, by which judgement is made as to with which reference block the correlation is stronger. However, as to the operation, the method of obtaining the average of the correlated information is the simplest.

In the video signal, the data which are mutually near in space have strong correlation. Accordingly, when judgement is made on the data in the block lying near the block in which the error has been detected (e.g., adjacent block) as to with which of the blocks near the reference block one page before the block in which the error has been detected and the reference block one page after it, respectively, it becomes possible to select the reference block which has the strong correlation with the block in which the error has been detected.

On the other hand, in case of utilizing the data of all the blocks in the page in which there are the blocks in which the errors have been detected, an operation to obtain the correlated information to be carried out with the correlation detector 55 is carried out on a page by page basis. However, if an error has been detected in either of the blocks, the blocks are not to be used. With respect to the operation to obtain the correlated information, the method of obtaining the average of the absolute values of the difference of DC coefficients by 1 block is the simplest. And, the result of said operation is written in the block memory 56 as the correlated information and transferred to the block memory 57 by page. Here, the block memories 56 and 57 may be D-FF of the digit number sufficient for 1 operation result. In the comparator 58, the correlated information between the page in which the error has been detected and the page before it is read out from the block memory 57, and the correlated information between the page in which the error has been detected and the page after it is read out from the block memory 56, and judgement is made as to with which reference block the correlation is stronger. In the case of the scene change, as there is correlation on only either one of the screen one page before or one page after over all pages, it becomes possible to select more accurately the page having the strong correlation by judging the concealment method in page unit.

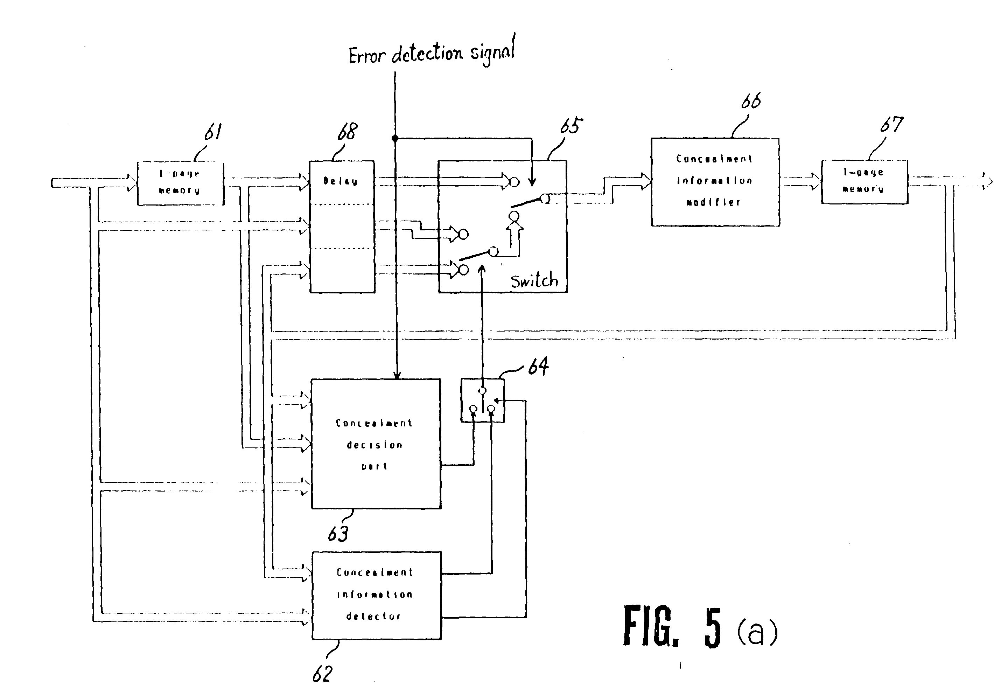

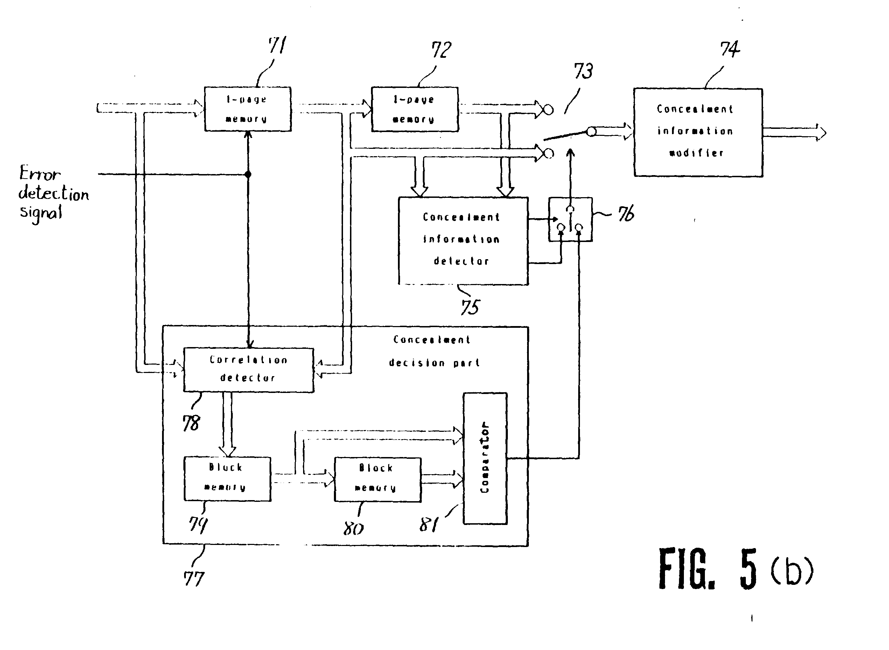

Fig. 5(a) is a block diagram of an error concealment part 26a of another embodiment, in which the parts 61 and 67 are 1-page memories, 62 is a concealment information detector, 63 is a concealment decision part, 64 is a first switch, 65 is a second switch, 66 is a concealment information modifier, and 68 is a delay. The operation of the seventh embodiment is explained hereafter. The block which has been transmitted or recorded and reproduced is first inputted to the 1-page memory 61. In the concealment information detector 62, the concealment information of the reference block one page after that to be inputted and the concealment information of the reference block one page before that outputted from the 1-page memory 67 are detected, and search is performed as to whether those reference blocks were previously concealed by the data in the block which is presently in process. In the block outputted from the 1-page memory 61, when no error has been detected, the said block is selected as such by the second switch 65. When an error has been detected in this block, if there is a block previously concealed with this block (reference block which is either one page before or one page after it), the first switch 64 is controlled by the information outputted from the concealment information detector 62, so as to select with the second switch 65 the reference block so concealed, and if there is not the previously concealed block, judgement is made with the concealment decision part 63 as to with which of the data in the reference blocks of one page before or one page after the correlation is stronger, and the first switch 64 is controlled by the information outputted from the concealment information detector 62, so that the reference block having the stronger correlation is selected by the second switch 65. The block thus selected with the second switch 65 is inputted to the concealment information modifier 66. In the concealment information modifier 66, modification of the concealment information is performed appropriately to store whether the block is concealed and in the case of concealment, with which reference block of the page (before or after) the concealment has been made. The output of the concealment information modifier 66 is also outputted through the 1-page memory 67. In general, as in fact there are a large number of non-erroneous data in the block in which errors have been detected, it is possible to utilize the data in the block in which errors have been detected in the concealment decision part 63. By comparing the data in the block one page before from the 1-page memory 67 with the data in the block one page after to be inputted and selecting the block in which there are a large number of the close data, the block having the stronger correlation can be selected. Comparison of data is performed in the similar manner to that in the concealment decision part 42 in the fifth embodiment. During the operation performed with the concealment decision part 63, the delay 68 delays the respective data in block unit.

By replacing the data of the block in which the error has been detected with the data of the reference block previously concealed with said block, it becomes possible to reproduce the original data in full. By this, probability where the blocks lying on the same position continuously for 2 pages are in concealed state decreases to a large extent. Accordingly, the degradation in image quality after repetition of transmitting or recording can be improved.

Fig. 5(b) is a block diagram of an error concealment part 26a of another embodiment, in which the parts 71 and 72 are 1-page memories, 73 is a second switch, 74 is a concealment information modifier, 75 is a concealment information detector, 76 is a first switch, 77 is a concealment decision part, 78 is a correlation detector, 79 and 80 are block memories, and 81 is a comparator. The block which has been transmitted or recorded and reproduced is first inputted to the 1-page memory 71. At this time, the signal concealed by the reference block one page before by setting the block in which error has been detected to 'write inhibit', the concealed signal by the reference block one page before is written in the 1-page memory 71. This signal is further transferred to the 1-page memory 72. With respect to the block which has been judged by the concealment information detector 75 and the concealment decision part 77 that it is better to be concealed by the reference block one page after the reference block rather than the reference block one page before out of the blocks in which errors have been detected, the signal from the 1-page memory 71 is selected by using the second switch 73. Also, with respect to the block in which no error has been detected and the block which has been judged by the concealment information detector 75 and the concealment decision part 77 that it is better to be concealed by the reference block one page before, the signal from the 1-page memory 72 is selected by using the second switch 73. The concealment information detector 75 detects the concealment information in the reference block one page after that inputted to the 1-page memory 72 and the concealment information in the reference block one page before that outputted from the 1-page memory 72 with respect to the block in which error has been detected, and searches as to whether those reference blocks were previously concealed by the data of the block at present in process. Here, if it has been known by the concealment information detector 75 that there is a block previously concealed with this block (reference block which is either one page before or the page after it), the first switch 76 is controlled so as to select with the second switch 73 the reference block so concealed, and if there is not the previously concealed block, judgement is made with the concealment decision part 77 as to with which of the data in the reference blocks of one page before or one page after the correlation is stronger, and the first switch 76 is controlled so that the reference block having the stronger correlation is selected by the second switch 73. The block thus selected with the second switch 73 is inputted to the concealment information modifier 74. In the concealment information modifier 74, modificatiion is performed according to necessity so as to make it possible to show the condition whether the concealment information in each block is in the block in which the respective block is concealed, and in case of the concealment, with which reference block of the page (before or after) the concealment has been made. In the concealment decision part 77, the difference of the DC coefficients of the parallelepiped which is a unit of the bit rate reduction is taken between the signal from the 1-page memory 71 and the signal to be inputted, and, based on the respective absolute values, correlation detection operation is carried out by one block with the correlation detector 78. However, if an error has been detected with either block, the related information is written in the block memory 79. As to the operation to obtain the correlation information, a method of obtaining the average of the absolute values of the differences of the DC coefficients by one block is the simplest way. And, the results thereof are written in the block memory 79 by block, and transferred to the block memory 80 by page. In the comparator 81, the correlated information of the block near the block in which errors have been detected and the block near the reference block one page before it is read out from the block memory 80, and the correlated information of the block near the block in which errors have been detected and the block near the reference block one page after it is read out from the block memory 79, and the respective correlated information is subjected to operation in consideration of the distance from the block in which the error has been detected, by which judgement is made as to with which reference block the correlation is stronger. However, as to the operation, the method of obtaining the average of the correlated information is the simplest. By this, in the same manner as in the case of the concealment decision part 54 in the sixth embodiment, it becomes possible to select the reference block of the one page having strong correlation with the block in which the error has been detected.

On the other hand, in case of utilizing the data of all the blocks in the page in which there are the blocks in which the errors have been detected, an operation to obtain the correlated information to be carried out with the correlation detector 78 is carried out by 1 page. However, if an error has been detected in either of the blocks, the blocks are not to be used. With respect to the operation to obtain the correlated information, the method of obtaining the average of the absolute values of the difference of DC coefficients by 1 block is the simplest. And, the result of said operation is written in the block memory 79 as the correlated information and transferred to the block memory 80 by page. Here, the block memories 79 and 80 may be D-FF of the digit number sufficient for 1 operation result. In the comparator 81, the correlated information between the page in which the error has been detected and the page before it is read out from the block memory 80, and the correlated information between the page in which the error has been detected and the page after it is read out from the block memory 79, and judgement is made as to with which reference block the correlation is stronger. This procedure can be the same as that of the concealment decision part 54 in the sixth embodiment.

In the fifth, sixth, seventh and eighth embodiments, there may be used not only the DC coefficient of parallelepiped but also the low frequency coefficient for the comparative operation. Further, as a bit rate reduction, a method other than the orthogonal transformation may be applicable. In order to simplify the apparatus, it may be possible to restrict the concealment to a method of replacing at all times with a block one page before. By this method, detection of inter-page correlation becomes unnecessary, and it may suffice for the concealment information to be always detected only one page after.

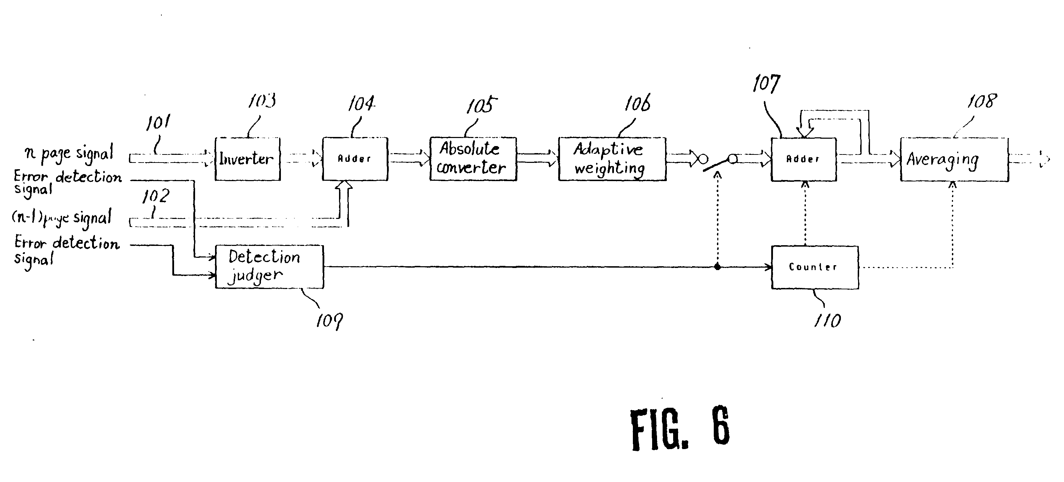

Fig. 6 is a block diagram of the correlation detectors 55 and 78 of the ninth embodiment, in which the parts 101 and 102 are the signal input parts, 103 is an inverter, 104 and 107 are adders, 105 is an absolute converter, 106 is an adaptive weighting circuit, 108 is an averaging circuit, 109 is a detection judger, and 110 is a counter. The signal of the n-th page is inputted from the signal input part 101, and the n+1-th page from the signal input part 102, and the difference between them is obtained by using the inverter 103 and adder 104, an absolute value is taken by the absolute converter 105, and linear addition is carried out by using an adaptive weighting circuit 106 and adder 107. However, if an error has been detected with either the n-th page signal or the n+1-th page signal, such error is judged by the detection judger 109 so as not to use it for linear addition. In case of obtaining the correlated information in the unit of 1 block, the averaging circuit 108 is unnecessary. In case of using the correlated information in the unit of 1 page, either the whole information in 1 page may be used or a sutable fixed number of sample blocks may be used out of the 1 page information. According to the former method, the absolute number of the signals to be used for linear addition with the detection judger 109 is obtained with the counter 110, and the value normalized with the averaging circuit 108 is obtained as the correlated information. According to the latter method, judgement on the selection of the sample block is also carried out with the counter 110, by which the value obtained by controlling the linear addition with the adder 107 is used as the correlated information. This circuit constitution is an example. Also, the signal on the n-th page and that on the n+1-th page may be inputted from either of the signal input parts 101 and 102.

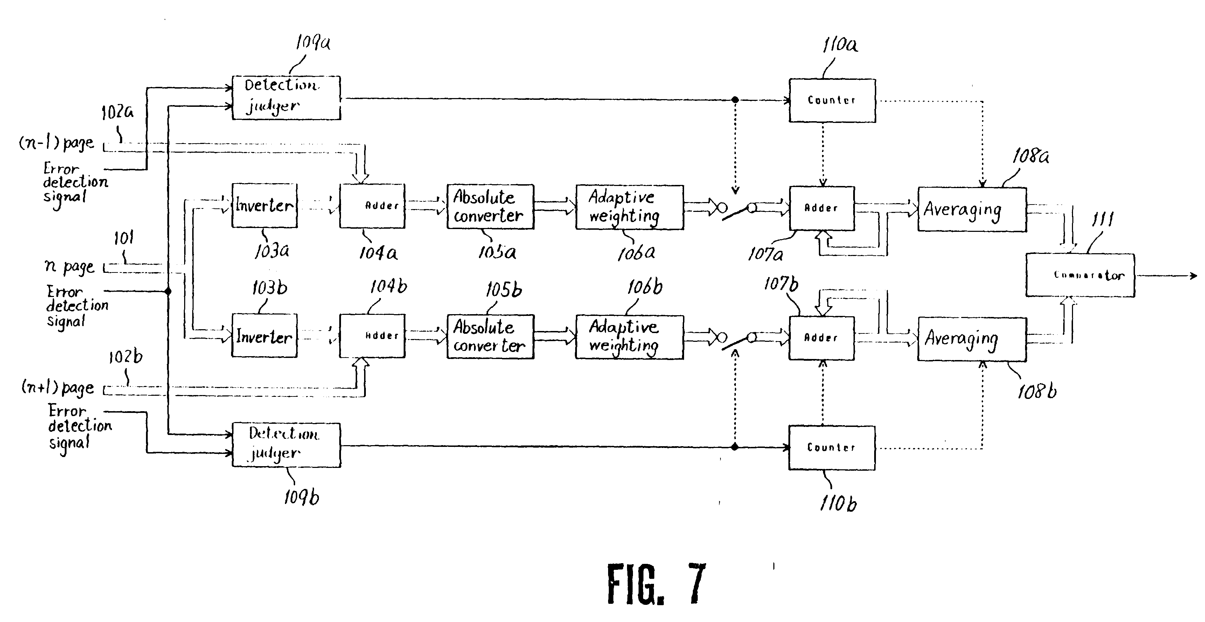

Fig. 7 is a block diagram of the concealment decision parts 42 and 63 of the tenth embodiment, in which the parts 101, 102a, 102b are signal input parts, 103a and 103b are inverters, 104a, 104b, 107a, and 107b are adders,105a and 105b are absolute converters, 106a and 106b are adaptive weighting circuits, 108a and 108b are averaging circuits, 109a and 109b are detection judgers, 110a and 110b are counters, and 111 is a comparator. The signal on the n-th page is inputted from the signal 101, the signal on the n-1-th page from the signal input part 102a, and the signal on the n+1-th page from the signal input part 102b. The correlated information of the signals between the n-th page and the n-1-th page obtained by the averaging circuit 108a is compared with the correlated information of the signals between the n-th page and the n+1-th page obtained by the averaging circuit 108b and judgement is made that the smaller value one has the stronger correlation. The method of obtaining the respective correlated information is the same as in the ninth embodiment.

## Claims

1. A digital video signal recording and reproducing apparatus comprising:
an encoding means (12a, 12b) for subjecting an input digital video signal to a bit rate reduction encoding to obtain a first bit rate reduction encoded video signal;
a recording signal processing means (15a, 15b) including a modulation means for modulating the first bit rate reduction encoded video signal from said encoding means to obtain a modulated video signal;
a recording and reproducing means (16a, 16b) for recording the modulated video signal from said recording signal processing means on a recording medium and for reproducing the recorded signal from said recording medium to obtain a reproduced modulated video signal;
a demodulation means (17, 17b) for demodulating the reproduced modulated signal to obtain a reproduced bit rate reduction encoded signal;
an error correcting and concealing means (18a, 18b) for detecting errors of the reproduced bit rate reduction encoded signal which contain correctable errors and uncorrectable errors, said error correcting and concealing means correcting said correctable errors and concealing said uncorrectable errors to obtain an encoded video signal in which the errors have been corrected or concealed;
a decoding means (20a, 20b) for decoding the encoded video signal obtained from said error correcting and concealing means to obtain a reproduced digital video signal,
characterised by further comprising;
a copy input means (13a, 13b) for inputting as a copy input signal a second bit rate reduction encoded video signal supplied from outside of said apparatus;
a selection means (14a, 14b) for selectively outputting either said first bit rate reduction encoded video signal from said encoding means or said second bit rate reduction encoded video signal from said copy input means and supplying a selected bit rate reduction encoded video signal to said recording signal processing means so that said modulation means modulates the selected bit rate reduction encoded video signal from said selection means to obtain the modulated video signal; and
a copy output means (19a, 19b) for outputting the encoded video signal obtained from said error correcting and concealing means as a copy output signal.

2. An apparatus according to Claim 1, wherein said recording signal processing means includes a means (31b) for adding a specific auxiliary data to the bit rate reduction encoded video signal from said selection means so that said auxiliary data will be recorded and reproduced together with the bit rate reduction encoded video signal, and said copy output means outputs a reproduced auxiliary data together with the encoded video signal from said error correcting means.

3. An apparatus according to Claim 1, wherein said second bit rate reduction encoded video signal contains an error correcting code, and said copy input means includes a means for decoding said error correcting code.

4. An apparatus according to Claim 1, wherein said copy output means (19a, 19b) includes a means (19a, 19b) for subjecting the encoded video signal to be outputted as the copy output signal to an error correcting encoding to obtain a copy output signal containing an error correcting code.

5. An apparatus according to Claim 1, wherein said recording signal processing means (15a, 15b) includes a means (31,32) for adding to the bit rate reduction encoded video signal from said selection means a copy protection information indicating a copy protection condition of the bit rate reduction encoded video signal.

6. An apparatus according to Claim 1, wherein said second bit rate reduction encoded video signal contains a copy protection information indicating a copy protection condition of the second bit rate reduction encoded video signal, and said recording signal processing means (l5a, 15b) includes a means (31,32) for changing said copy protection information.

7. An apparatus according to Claim 1, wherein said error correcting and concealing means (18a, 18b) comprises:
an error correcting means (25a) for detecting and correcting errors of the reproduced bit rate reduction encoded signal to obtain an error corrected encoded video signal in which an uncorrectable error has been detected but has not been corrected; and
an error concealing means (26a) for concealing said uncorrectable error contained in the error corrected encoded video signal from said error correcting means to obtain an error concealed encoded video signal.

8. An apparatus according to claim 7, wherein said encoding means (12a, 12b) divides an input digital video signal of each page constituted by one or more fields into blocks, and subjects the input digital video signal to a bit rate reduction encoding on a block by block basis to obtain the bit rate reduction encoded video signal.

9. An apparatus according to claim 8, wherein, when an error block is being processed in which an incorrectable error has been detected and has not been corrected, said error block is included as is in the encoded video signal obtained from said error correcting means.

10. An apparatus according to claim 9 wherein said error concealing means (26a) comprises:
a reference block deciding means (42;54;63;77), coupled to the output of said error correcting means arranged to use reference blocks for checking correlations of data in said error block with data in a first reference block at corresponding position on a previous page and data in a second reference block which is at a corresponding position on a next page, deciding which one of the first and second reference blocks has a stronger correlation with the error block than the other, and outputting a block decision signal indicative of one of the first and second reference blocks which has the stronger correlation with the error block than the other; and
a replacing means (43, 53, 65, 73) responsive to the block decision signal for replacing the error block with the reference block indicated by the block decision signal to thereby obtain an error concealed encoded video signal.

11. An apparatus according to claim 10, wherein said recording signal processing means (15a, 15b) includes a means for adding to the bit rate reduction encoded video signal concealment data indicating whether or not a block is a concealed block which has been replaced by another block, and the block by which the concealed block has been replaced, so that
said reproduced bit rate reduction encoded signal includes a reproduced concealment information and,
wherein said error correcting and concealing means (18a, 18b) additionally comprises:
a concealed block detecting means (62,75) coupled to said error correcting means (25a) for detecting from reproduced concealment information of previous blocks which said error block could have replaced whether or not said error block is a block by which another block has been replaced and which block has been replaced by said error block, and for outputting a block detection signal indicating whether or not said error block has replaced another block and, if said error block has replaced another block, a block which has been replaced by said error block, and wherein said replacing means further comprises a selecting means (64;76) responsive to said block detection signal arranged such that said replacing means replaces the error block by the block indicated by said block detection signal when the error block has replaced another and replaces the error block with said reference block indicated by said block decision signal when the error block has not replaced another block.

12. Apparatus according to claims 10 or 11 wherein said reference block deciding means (42;54;63;77) includes a means (55;78) for checking correlation between data in said error block and said reference blocks by calculating correlations between one or more first reference blocks on the same page as said error block and futher reference blocks in corresponding positions on the previous and subsequent pages.

13. Apparatus according to claim 12 wherein said reference block on the same page as said error block is said error block and said further reference blocks comprise said replaced blocks.

14. Apparatus according to claim 12 wherein said first reference block is a block adjacent said error block.

15. Apparatus according to claim 12 wherein said first reference blocks are blocks adjacent said error block.

16. Apparatus according to any of claims 14 to 15 wherein all said reference blocks are blocks without errors.

17. Apparatus according to claim 12 wherein said first reference blocks are all the blocks on the page with said error block in which no error has been detected and no error has been detected in corresponding blocks on said previous and subsequent pages.

18. Apparatus according to any of claims 12 or 17 wherein said encoding means (12a,12b) divides a digital video signal in each block into low frequency components and high frequency components.

19. Apparatus according to claim 18 wherein said means (55,78) compares low frequency components in the first reference block or blocks and low frequency components in the further reference blocks to thereby detect the correlation between the error block and each of said first and said further reference blocks.

20. Apparatus according to claim 19 wherein said reference block deciding means (42,54,63,77) further comprises means (111) for comparing a sum of absolute values of differences between low frequency components in the first reference block or blocks and low frequency components in the futher reference block or blocks on the previous page and a sum of absolute values of differences between the low frequency components in the first reference block or blocks and low frequency components in the further reference block or blocks on the subsequent page, and
selecting one of the first and further reference blocks associated with the page that gives the smallest value of the sums.

21. Apparatus according to claim 19 wherein said reference block deciding means (42,54,63,77) further comprises means (111) for comparing
an average of absolute values of differences between low frequency components in the first reference block or blocks and low frequency components in the further reference block or blocks on the previous page; and
an average of absolute values of differences between low frequency components in the first reference block or blocks and low frequency components in the futher reference block or blocks on the subsequent page; and
selecting one of the first and further reference blocks associated with the page that gives the smallest value of the averages.

## Patentansprüche

1. Digitale Videosignalaufzeichungs- und wiedergabevorrichtuung, die umfaßt:
eine Codierungseinrichtung (12a, 12b), die ein digitales Videoeingangssignal einer Bitratenreduktionscodierung unterwirft, um ein erstes bitratenreduktionscodiertes Videosignal zu erlangen;
eine Aufzeichnungssignal-Verarbeitungseinrichtung (15a, 15b) mit einer Modulationseinrichtung zum Modulieren des ersten bitratenreduktionscodierten Videosignals von der Codierungseinrichtung, um ein moduliertes Videosignal zu erlangen;
eine Aufzeichnungs- und Wiedergabeeinrichtung (16a, 16b) zum Aufzeichnen des modulierten Videosignals von der Aufzeichnungssignal-Verarbeitungseinrichtung auf einem Aufnahmemedium und zum Wiedergeben des aufgezeichneten Signals von dem Aufnahmemedium, um ein wiedergegebenes moduliertes Videosignal zu erlangen;
eine Demodulationseinrichtung (17a, 17b) zum Demodulieren des wiedergegebenen modulierten Signals, um ein wiedergegebenes bitratenreduktionscodiertes Signal zu erlangen;
eine Fehlerkorrektur- und -verschleierungseinrichtung (18a, 18b) zum Erkennen von Fehlern des wiedergegebenen bitratenreduktionscodierten Signals, das korrigierbare und unkorrigierbare Fehler enthält, wobei die Fehlerkorrektur- und -verschleierungseinrichtung die korrigierbaren Fehler korrigiert und die unkorrigierbaren Fehler verschleiert, um ein codiertes Videosignal zu erlangen, in dem die Fehler korrigiert oder verschleiert worden sind;
eine Decodierungseinrichtung (20a, 20b) zum Decodieren des von der Fehlerkorrektur- und -verschleierungseinrichtung erlangten codierten Videosignals, um ein wiedergegebenes digitales Videosignal zu erlangen,
gekennzeichnet durch weiter umfassend;
eine Kopiereingabeeinrichtung (13a, 13b) zum Eingeben eines zweiten von außerhalb der Vorrichtung gelieferten bitratenreduktionscodierten Videosignals als ein Kopiereingangssignal;
eine Auswahleinrichtung (14a, 14b) zum selektiven Ausgeben entweder des ersten bitratenreduktionscodierten Videosignals von der Codierungseinrichtung oder des zweiten bitratenreduktionscodierten Videosignals von der Kopiereingabeeinrichtung und Liefern eines ausgewählten bitratenreduktionscodierten Videosignals an die Aufzeichnungssignal-Verarbeitungseinrichtung, so daß die Modulationseinrichtung das ausgewählte bitratenreduktionscodierte Videosignal von der Auswahleinrichtung moduliert, um das modulierte Videosignal zu erlangen, und
eine Kopierausgabeeinrichtung (19a, 19b) zum Ausgeben des von der Fehlerkorrektur- und -verschleierungseinrichtung erlangten codierten Videosignals als ein Kopierausgangssignal.

2. Vorrichtung nach Anspruch 1, bei der die Aufzeichnungssignal-Verarbeitungseinrichtung eine Einrichtung (31b) umfaßt, um dem bitratenreduktionscodierten Videosignal von der Auswahleinrichtung spezifische Hilfsdaten hinzuzufügen, so daß die Hilfsdaten zusammen mit dem bitratenreduktionscodierten Videosignal aufgezeichnet und wiedergegeben werden und die Kopierausgabeeinrichtung wiedergegebene Hilfsdaten zusammen mit dem codierten Videosignal von der Fehlerkorrektureinrichtung ausgibt.

3. Vorrichtung nach Anspruch 1, bei der das zweite bitratenreduktionscodierte Videosignal einen Fehlerkorrekturcode enthält und die Kopiereingabeeinrichtung eine Einrichtung zum Decodieren des Fehlerkorrekturcodes umfaßt.

4. Vorrichtung nach Anspruch 1, bei der die Kopierausgabeeinrichtung (19a, 19b) eine Einrichtung (19a, 19b) umfaßt, um das als das Kopierausgangssignal auszugebende codierte Videosignal einer Fehlerkorrekturcodierung zu unterwerfen, um ein Kopierausgangssignal zu erlangen, das einen Fehlerkorrekturcode enthält.

5. Vorrichtung nach Anspruch 1, bei der die Aufzeichnungssignal-Verarbeitungseinrichtung (15a, 15b) eine Einrichtung (31, 32) umfaßt, um dem bitratenreduktionscodierten Videosignal von der Auswahleinrichtung eine Kopierschutzinformation hinzuzufügen, die einen Kopierschutzzustand des bitratenreduktionscodierten Videosignals anzeigt.

6. Vorrichtung nach Anspruch 1, bei der das zweite bitratenreduktionscodierte Videosignal eine Kopierschutzinformation enthält, die einen Kopierschutzzustand des zweiten bitratenreduktionscodierten Videosignals anzeigt, und die Aufzeichnungssignal-Verarbeitungseinrichtung (15a, 15b) eine Einrichtung (31, 32) umfaßt, um die Kopierschutzinformation zu verändern.

7. Vorrichtung nach Anspruch 1, bei der die Fehlerkorrektur- und -verschleierungseinrichtung (18a, 18b) umfaßt:
eine Fehlerkorrektureinrichtung (25a) zum Erfassen und Korrigieren von Fehlern des wiedergegebenen bitratenreduktionscodierten Signals, um ein fehlerkorrigiertes codiertes Videosignal zu erlangen, in dem ein unkorrigierbarer Fehler erfaßt, aber nicht korrigiert worden ist, und
eine Fehlerverschleierungseinrichtung (26a) zum Verschleiern des in dem fehlerkorrigierten codierten Videosignal von der Fehlerkorrektureinrichtung enthaltenen unkorrigierbaren Fehlers, um ein fehlerverschleiertes codiertes Videosignal zu erlangen.

8. Vorrichtung nach Anspruch 7, bei der die Codierungseinrichtung (12a, 12b) ein digitales Videoeingangssignal jeder durch ein oder mehr Halbbilder gebildeten Seite in Blöcke teilt und das digitale Videoeingangssignal einer Bitratenreduktionscodierung auf einer Block-für-Block-Basis unterwirft, um das bitratenreduktionscodierte Videosignal zu erlangen.

9. Vorrichtung nach Anspruch 8, bei der, wenn ein Fehlerblock verarbeitet wird, in dem ein unkorrigierbarer Fehler erfaßt und nicht korrigiert worden ist, der Fehlerblock wie er ist in das von der Fehlerkorrektureinrichtung erhaltene codierte Videosignal eingeschlossen wird.

10. Vorrichtung nach Anspruch 9, bei der die Fehlerverschleierungseinrichtung (26a) umfaßt:
eine Referenzblock-Entscheidungseinrichtung (42; 54; 63; 77), die mit dem Ausgang der Fehlerkorrektureinrichtung verbunden und eingerichtet ist, Referenzblöcke zum Prüfen von Korrelationen von Daten in dem Fehlerblock mit Daten in einem ersten Referenzblock an entsprechender Stelle auf einer vorangehenden Seite und Daten in einem zweiten Referenzblock, der sich an einer entsprechenen Stelle auf einer nächsten Seite befindet, zu verwenden, um zu entscheiden, welcher der zwei Referenzblöcke eine stärkere Korrelation mit dem Fehlerblock aufweist als der andere, und ein Blockentscheidungssignal auszugeben, das einnen der zwei Referenzblöcke angibt, der die stärkere Korrelation mit dem Fehlerblock aufweist als der andere, und
eine Ersetzungseinrichtung (43, 53, 65, 73), die auf das Blockentscheidungssignal anspricht und den Fehlerblock durch den durch das Blockentscheidungssignal angegebenen Referenzblock ersetzt, um ein fehlerverschleiertes codiertes Videosignal zu erlangen.

11. Vorrichtung nach Anspruch 10, bei der die Aufzeichnungssignal-Verarbeitungseinrichtung (15a, 15b) eine Einrichtung umfaßt, um dem bitratenreduktionscodierten Videosignal Verschleierungsdaten hinzuzufügen, die anzeigen, ob ein Block ein verschleierter Block ist, der durch einen anderen Block ersetzt worden ist, oder nicht, und den Block, durch den der verschleierte Block ersetzt worden ist, so daß
das wiedergegebene bitratenreduktionscodierte Signal eine wiedergegebene Verschleierungsinformation umfaßt, und
bei der die Fehlerkorrektur- und -verschleierungseinrichtung (18a, 18b) außerdem umfaßt:
eine Detektionseinrichtung für verschleierte Blöcke (62, 75), verbunden mit der Fehlerkorrektureinrichtung (25a), die aus wiedergegebener Verschleierungsinformation von vorangehenden Blöcken, die der Fehlerblock ersetzt haben könnte, ermittelt, ob der Fehlerblock ein Block ist, durch den ein anderer Block ersetzt worden ist, oder nicht, und welcher Block durch den Fehlerblock ersetzt worden ist, und die ein Blockdetektionssignal ausgibt, das anzeigt, ob der Fehlerblock einen anderen Block ersetzt hat oder nicht, und wenn der Fehlerblock einen anderen Block ersetzt hat, einen Block, der durch den Fehlerblock ersetzt worden ist, und worin die Ersetzungseinrichtung weiter eine Auswahleinrichtung (64; 76) umfaßt, die auf das Blockdetektionssignal anspricht und so eingerichtet ist, daß die Ersetzungseinrichtung den Fehlerblock durch den durch das Blockdetektionssignal angezeigten Block ersetzt, wenn der Fehlerblock einen anderen Block ersetzt hat, und den Fehlerblock durch den durch das Blockentscheidungssignal angegebenen Referenzblock ersetzt, wenn der Fehlerblock keinen anderen Block ersetzt hat.

12. Vorrichtung nach Anspruch 10 oder 11, bei der die Referenzblock-Entscheidungseinrichtung (42; 54; 63; 77) eine Einrichtung (55; 78) umfaßt, die die Korrelation zwischen Daten in dem Fehlerblock und den Referenzblöcken durch Berechnen von Korrelationen zwischen einem oder mehr ersten Referenzblöcken auf der derselben Seite wie der Fehlerblock und weiteren Referenzblöcken an entsprechenden Stellen auf den vorangehenden und nachfolgenden Seiten prüft.

13. Vorrichtung nach Anspruch 12, bei der der Referenzblock auf derselben Seite wie der Fehlerblock der Fehlerblock ist und die weiteren Referenzblöcke die ersetzten Blöcke umfassen.

14. Vorrichtung nach Anspruch 12, bei der der erste Referenzblock ein an den Fehlerblock angrenzender Block ist.

15. Vorrichtung nach Anspruch 12, bei der die ersten Referenzblöcke an den Fehlerblock angrenzende Blöcke sind.

16. Vorrichtung nach einem der Ansprüche 14 bis 15, bei der alle Referenzblöcke Blöcke ohne Fehler sind,

17. Vorrichtung nach Anspruch 12, bei der die ersten Referenzblöcke die ganzen Blöcke auf der Seite mit dem Fehlerblock sind, in denen kein Fehler ermittelt worden ist, und kein Fehler in entsprechenden Blöcken auf den vorangehenden und nachfolgenden Seiten ermittelt worden ist.

18. Vorrichtung nach einem der Ansprüche 12 oder 17, bei der die Codierungseinrichtung (12a, 12b) ein digitales Videosignal in jedem Block in niederfrequente Komponenten und hochfrequente Komponenten teilt.

19. Vorrichtung nach Anspruch 18, bei der die Einrichtung (55, 78) niederfrequente Komponenten in dem ersten Referenzblock oder -blökken und niederfrequente Komponenten in den weiteren Referenzblöcken vergleicht, um dadurch die Korrelation zwischen dem Fehlerblock und jedem der ersten und der weiteren Referenzblöcke zu ermitteln.

20. Vorrichtung nach Anspruch 19, bei der die Referenzblock-Entscheidungseinrichtung (42, 54, 63, 77) weiter eine Einrichtung (111) umfaßt, die eine Summe von Absolutwerten von Differenzen zwischen niederfrequenten Komponenten in dem ersten Referenzblock oder -blöcken und niederfrequenten Komponenten in dem weiteren Referenzblock oder -blöcken auf der vorangehenden Seite und eine Summe von Absolutwerten von Differenzen zwischen den niederfrequenten Komponenten in dem ersten Referenzblock oder -blöcken und niederfrequenten Komponenten in dem weiteren Referenzblock oder -blöcken auf der nachfolgenden Seite vergleicht und
einen der ersten und weiteren Referenzblöcke auswählt, der mit der Seite verbunden ist, die den kleinsten Wert der Summen ergibt.

21. Vorrichtung nach Anspruch 19, bei der die Referenzblock-Entscheidungseinrichtung (42, 54, 63, 77) weiter eine Einrichtung (111) umfaßt, die einen Mittelwert von Absolutwerten von Differenzen zwischen niederfrequenten Komponenten in dem ersten Referenzblock oder -blöcken und niederfrequenten Komponenten in dem weiteren Referenzblock oder -blöcken auf der vorangehenden Seite und einen Mittelwert von Absolutwerten von Differenzen zwischen den niederfrequenten Komponenten in dem ersten Referenzblock oder -blöcken und niederfrequenten Komponenten in dem weiteren Referenzblock oder -blöcken auf der nachfolgenden Seite vergleicht und
einen der ersten und weiteren Referenzblöcke auswählt, der mit der Seite verbunden ist, die den kleinsten Wert der Mittelwerte ergibt.

## Revendications

1. Dispositif d'enregistrement et de reproduction de signal vidéo numérique comprenant :
des moyens de codage (12a, 12b) destinés à soumettre un signal vidéo numérique d'entrée à un codage de réduction de débit binaire pour obtenir un premier signal vidéo codé à réduction de débit binaire ;
des moyens de traitement de signal d'enregistrement (15a, 15b) comprenant des moyens de modulation destinés à moduler le premïer signal vidéo codé à réduction de débit binaire provenant desdits moyens de codage pour obtenir un signal vidéo modulé ;
des moyens d'enregistrement et de reproduction (16a, 16b) destinés à enregistrer le signal vidéo modulé provenant desdits moyens de traitement de signal d'enregistrement sur un support d'enregistrement et destinés à reproduire le signal enregistré provenant dudit support d'enregistrement pour obtenir un signal vidéo modulé reproduit ;
des moyens de démodulation (17, 17b) destinés à démoduler le signal modulé reproduit pour obtenir un signal codé à réduction de débit binaire reproduit ;
des moyens de correction et de dissimulation d'erreur (18a, 18b) destinés à détecter des erreurs du signal codé à réduction de débit binaire reproduit qui contiennent des erreurs corrigibles et des erreurs non-corrigibles, lesdits moyens de correction et de dissimulation d'erreur corrigeant lesdites erreurs corrigibles et dissimulant lesdites erreurs non-corrigibles pour obtenir un signal vidéo codé dans lequel les erreurs ont été corrigées ou dissimulées ;
des moyens de décodage (20a, 20b) destinés à décoder le signal vidéo codé obtenu à partir desdits moyens de correction et de dissimulation d'erreur pour obtenir un signal vidéo numérique reproduit,
caractérisé en ce qu'il comprend, de plus :
des moyens d'entrée de copie (13a, 13b) destinés à entrer, comme signal d'entrée de copie, un second signal vidéo codé à réduction de débit binaire fourni à partir de l'extérieur dudit dispositif ;
des moyens de sélection (14a, 14b) destinés à sortir, de manière sélective, soit ledit premier signal vidéo codé à réduction de débit binaire provenant desdits moyens de codage, soit ledit second signal vidéo codé à réduction de débit binaire provenant desdits moyens d'entrée de copie et destinés à fournir un signal vidéo codé à réduction de débit binaire sélectionné auxdits moyens de traitement de signal d'enregistrement, de sorte que lesdits moyens de modulation modulent le signal vidéo codé à réduction de débit binaire sélectionné provenant desdits moyens de sélection pour obtenir le signal vidéo modulé ; et
des moyens de sortie de copie (19a, 19b) destinés à sortir le signal vidéo codé obtenu à partir desdits moyens de correction et de dissimulation d'erreur comme signal de sortie de copie.

2. Dispositif selon la revendication 1, dans lequel lesdits moyens de traitement de signal d'enregistrement comprennent des moyens (31b) destinés à ajouter des données auxiliaires spécifiques au signal vidéo codé à réduction de débit binaire provenant desdits moyens de sélection, de sorte que lesdites données auxiliaires soient enregistrées et reproduites avec le signal vidéo codé à réduction de débit binaire et dans lequel lesdits moyens de sortie de copie sortent des données auxiliaires reproduites avec le signal vidéo codé provenant desdits moyens de correction d'erreur.

3. Dispositif selon la revendication 1, dans lequel ledit second signal vidéo codé à réduction de débit binaire contient un code de correction d'erreur et lesdits moyens d'entrée de copie comprennent des moyens destinés à décoder ledit code de correction d'erreur.

4. Dispositif selon la revendication 1, dans lequel lesdits moyens de sortie de copie (19a, 19b) comprennent des moyens (19a, 19b) destinés à soumettre le signal vidéo codé, à sortir comme signal de sortie de copie, à un codage à correction d'erreur pour obtenir un signal de sortie de copie contenant un code de correction d'erreur.

5. Dispositif selon la revendication 1, dans lequel lesdits moyens de traitement de signal d'enregistrement (15a, 15b) comprennent des moyens (31, 32) destinés à ajouter au signal vidéo codé à réduction de débit binaire provenant desdits moyens de sélection des informations de protection de copie indiquant une condition de protection de copie du signal vidéo codé à réduction de débit binaire.

6. Dispositif selon la revendication 1, dans lequel ledit second signal vidéo codé à réduction de débit binaire contient des informations de protection de copie indiquant une condition de protection de copie du second signal vidéo codé à réduction de débit binaire et dans lequel lesdits moyens de traitement de signal d'enregistrement (15a, 15b) comprennent des moyens (31, 32) destinés à modifier lesdites informations de protection de copie.

7. Dispositif selon la revendication 1, dans lequel lesdits moyens de correction et de dissimulation d'erreur (18a, 18b) comprennent :
des moyens de correction d'erreur (25a) destinés à détecter et corriger des erreurs du signal codé à réduction de débit binaire reproduit pour obtenir un signal vidéo codé à erreur corrigée dans lequel une erreur non-corrigible a été détectée, mais n'a pas été corrigée ; et
des moyens de dissimulation d'erreur (26a) destinés à dissimuler ladite erreur non-corrigible contenue dans le signal vidéo codé à erreur corrigée provenant desdits moyens de correction d'erreur pour obtenir un signal vidéo codé à erreur dissimulée.

8. Dispositif selon la revendication 7, dans lequel lesdits moyens de codage (12a, 12b) divisent un signal vidéo numérique d'entrée de chaque page constituée d'un ou plusieurs champs en blocs et soumettent le signal vidéo numérique d'entrée à un codage de réduction de débit binaire sur une base bloc par bloc pour obtenir le signal vidéo codé à réduction de débit binaire.

9. Dispositif selon la revendication 8, dans lequel lorsqu'un bloc avec erreurs est traité dans lequel une erreur non-corrigible a été détectée et n'a pas été corrigée, ledit bloc avec erreurs est inclus tel quel dans le signal vidéo codé obtenu à partir desdits moyens de correction d'erreur.

10. Dispositif selon la revendication 9, dans lequel lesdits moyens de dissimulation d'erreur (26a) comprennent :
des moyens de décision de bloc de référence (42 ; 54 ; 63 ; 77), couplés à la sortie desdits moyens de correction d'erreur agencés pour utiliser les blocs de référence pour vérifier les corrélations des données dans ledit bloc avec erreurs avec les données dans un premier bloc de référence à une position correspondante sur une page précédente et les données dans un second bloc de référence qui se trouve à une position correspondante sur une page suivante, pour décider lequel des premier et second blocs de référence a une corrélation plus forte avec le bloc avec erreurs que l'autre, et pour sortir un signal de décision de bloc indicatif de l'un des premier et second blocs de référence qui a la plus forte corrélation avec le bloc avec erreurs que l'autre ; et
des moyens de remplacement (43, 53, 65, 73) sensibles au signal de décision de bloc pour remplacer le bloc avec erreurs par le bloc de référence indiqué par le signal de décision de bloc pour obtenir, de ce fait, un signal vidéo codé à erreur dissimulée.

11. Dispositif selon la revendication 10, dans lequel lesdits moyens de traitement de signal d'enregistrement (15a, 15b) comprennent des moyens destinés à ajouter au signal vidéo codé à réduction de débit binaire des données de dissimulation indiquant si, oui ou non, un bloc est un bloc dissimulé qui a été remplacé par un autre bloc, et le bloc par lequel le bloc dissimulé a été remplacé, de sorte que
ledit signal codé à réduction de débit binaire reproduit comprenne des informations de dissimulation reproduites et,
dans lequel lesdits moyens de correction et de dissimulation d'erreur (18a, 18b) comprennent en outre :
des moyens de détection de bloc dissimulé (62, 75) couplés auxdits moyens de correction d'erreur (25a) destinés à détecter, à partir des informations de dissimulation reproduites de blocs précédents, lequel ledit bloc avec erreurs pourrait avoir remplacé, si ledit bloc avec erreurs est ou non un bloc par lequel un autre bloc a été remplacé et quel bloc a été remplacé par ledit bloc avec erreurs, et destinés à sortir un signal de détection de bloc indiquant si, oui ou non, ledit bloc avec erreurs a remplacé un autre bloc et, si ledit bloc avec erreurs a remplacé un autre bloc, un bloc qui a été remplacé par ledit bloc avec erreurs, et dans lequel lesdits moyens de remplacement comprennent, de plus, des moyens de sélection (64 ; 76) sensibles audit signal de détection de bloc, agencés de telle sorte que lesdits moyens de remplacement remplacent le bloc avec erreurs par le bloc indiqué par ledit signal de détection de bloc lorsque le bloc avec erreurs a remplacé un autre bloc et remplacent le bloc avec erreurs par ledit bloc de référence indiqué par ledit signal de décision de bloc lorsque le bloc avec erreurs n'a pas remplacé un autre bloc.

12. Dispositif selon les revendications 10 ou 11, dans lequel lesdits moyens de décision de bloc de référence (42 ; 54 ; 63 ; 77) comprennent des moyens (55 ; 78) destinés à vérifier la corrélation entre les données dans ledit bloc avec erreurs et dans lesdits blocs de référence en calculant les corrélations entre un ou plusieurs premiers blocs de référence sur la même page comme ledit bloc avec erreurs et d'autres blocs de référence dans des positions correspondantes sur les pages précédente et suivante.

13. Dispositif selon la revendication 12, dans lequel ledit bloc de référence sur la même page que ledit bloc avec erreurs est ledit bloc avec erreurs et lesdits autres blocs de référence comprennent lesdits blocs remplacés.

14. Dispositif selon la revendication 12, dans lequel ledit premier bloc de référence est un bloc contigu audit bloc avec erreurs.

15. Dispositif selon la revendication 12, dans lequel lesdits premiers blocs de référence sont des blocs contigus audit bloc avec erreurs.

16. Dispositif selon l'une des revendications 14 ou 15, dans lequel tous lesdits blocs de référence sont des blocs sans erreurs.

17. Le dispositif selon la revendication 12, dans lequel lesdits premiers blocs de référence sont tous les blocs sur la page avec ledit bloc avec erreurs dans lesquels aucune erreur n'a été détectée et aucune erreur n'a été détectée dans les blocs correspondants sur lesdites pages précédente et suivante.

18. Dispositif selon l'une quelconque des revendications 12 ou 17, dans lequel lesdits moyens de codage (12a, 12b) divisent un signal vidéo numérique dans chaque bloc en composantes basse fréquence et en composantes haute fréquence.

19. Dispositif selon la revendication 18, dans lequel lesdits moyens (55, 78) comparent les composantes basse fréquence dans le ou les premiers blocs de référence et les composantes basse fréquence dans les autres blocs de référence pour détecter, de ce fait, la corrélation entre le bloc avec erreurs et chacun desdits premiers et autres blocs de référence.

20. Dispositif selon la revendication 19, dans lequel lesdits moyens de décision de bloc de référence (42, 54, 63, 77) comprennent, de plus, des moyens (111) destinés à comparer une somme des valeurs absolues des différences entre les composantes basse fréquence dans le ou les premiers blocs de référence et les composantes basse fréquence dans l'autre ou les autres blocs de référence sur la page précédente et une somme des valeurs absolues des différences entre les composantes basse fréquence dans le ou les premiers blocs de référence et les composantes basse fréquence dans l'autre ou les autres blocs de référence sur la page suivante, et
destinés à sélectionner l'un des premiers et des autres blocs de référence associé à la page qui donne la plus petite valeur des sommes.

21. Dispositif selon la revendication 19, dans lequel lesdits moyens de décision de bloc de référence (42, 54, 63, 77) comprennent, de plus, des moyens (111) destinés à comparer
une moyenne des valeurs absolues des différences entre les composantes basse fréquence dans le ou les premiers blocs de référence et les composantes basse fréquence dans l'autre ou les autres blocs de référence sur la page précédente ; et
une moyenne des valeurs absolues des différences entre les composantes basse fréquence dans le ou les premiers blocs de référence et les composantes basse fréquence dans l'autre ou les autres blocs de référence sur la page suivante ; et
destinés à sélectionner l'un des premiers et des autres blocs de référence associé à la page qui donne la plus petite valeur des moyennes.
